(19) **Europäisches Patentamt / European Patent Office / Office européen des brevets**

(11) **EP 4 660 240 A1**

(12) # EUROPEAN PATENT APPLICATION

(43) Date of publication:
**10.12.2025 Bulletin 2025/50**

(21) Application number: **24180657.9**

(22) Date of filing: **07.06.2024**

(51) International Patent Classification (IPC):
**C08L 23/14** (2006.01)

(52) Cooperative Patent Classification (CPC):
(C-Sets available)
**C08L 23/14; C08L 2207/02** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **MILEVA, Daniela**
  **4021 Linz (AT)**
- **GALL, Markus**
  **4021 Linz (AT)**

- **BRAUN, Hermann**
  **4021 Linz (AT)**
- **BICABA, Yoann**
  **75009 Paris (FR)**
- **BERTHIOT, Laetitia**
  **75009 Paris (FR)**
- **NEUMULLER, Theresa**
  **4021 Linz (AT)**
- **MITTER, Franz**
  **4021 Linz (AT)**
- **SACCHETTI, Francisco**
  **4021 Linz (AT)**

(74) Representative: **Maiwald GmbH**
**Elisenhof**
**Elisenstraße 3**
**80335 München (DE)**

(54) **POLYPROPYLENE COMPOSITION FOR EXTERIOR AUTOMOTIVE APPLICATIONS**

(57)    A composition suitable for automotive applications obtainable by blending at least components (A), (B), (C) and (D)
(A) 15 wt.-% to 45 wt.-%, preferably 18 to 44 wt.-%, more preferably 20 to 40 wt.-% of a mixed-plastics polypropylene blend;
(B) 15 wt.-% to 45 wt.-%, preferably 20 to 44 wt.-%, more preferably 35 to 43 wt.-% of a heterophasic propylene copolymer;
(C) 10 wt.-% to 25 wt.-%, preferably 11 to 24 wt.-%, more preferably 12 to 23 wt.-% of an ethylene-based plastomer; and
(D) 10 wt.-% to 25 wt.-%, preferably 11 to 22 wt.-%, more preferably 12 to 20 wt.-% of an inorganic filler.

FIG. 1

**(Cont. next page)**

EP 4 660 240 A1

(52) Cooperative Patent Classification (CPC): (Cont.)

C-Sets
**C08L 23/14, C08L 23/12, C08L 23/16,
C08L 23/0815**

## Description

The present invention relates to polypropylene compositions suitable especially for automotive exterior applications comprising mixed plastics polypropylene-based blends and inorganic fillers.

## Technical Background

One of the fundamental problems in polymer business is recycling. At the moment, the market for recyclates, particularly recyclates from household waste, commonly denoted PCR ('post-consumer - recyclate') is somewhat limited. Starting from household waste, the sorting and separation processes employed will not allow preparing pure polymers, i.e. there will always be some contaminants, or the processes may even result in blends of different polymers. When it comes to polyolefins, which constitute the vast majority of the polymer fraction of the collected household waste, a perfect separation of polypropylene and polyethylene is hardly possible. Recycled polyolefin materials, particularly post-consumer recyclates, are conventionally cross-contaminated with non-polyolefin materials such as polyethylene terephthalate, polyamide, polystyrene or non-polymeric substances like wood, paper, glass or aluminum. Even worse, those post-consumer recycled polyolefin materials are readily available on a multi-ton scale but unfortunately have limited mechanical properties and frequently severe odor and/or emission problems. Major requirements in the automotive segment for exterior applications are confined in an excellent stiffness-toughness balance, good dimensional stability and most importantly homogeneous surface appearance.

Recently, the demand of the market has expanded in direction of using recycled polyolefins in blends with virgin polymers in order to fulfil the specific requirements of a final part.

The main challenge is to incorporate as much as possible from these recyclate in the composition and obtain similar performances as for compositions comprising only virgin grade materials.

The present invention is based on the surprising finding that by carefully selecting mixed plastics polypropylene-based blends originating from post-consumer recycled polyolefin streams and having a high melt flow rate and a low intrinsic viscosity of the soluble fraction (iV(SF)) in polypropylene based compositions, which further contain heterophasic propylene copolymer based virgin components, ethylene-based plastomers and inorganic fillers, polypropylene based compositions with a good balance of properties in regard to impact properties, mechanical properties, and with superior surface appearance, can be obtained.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a," "an," and the like refers to one or more.

Mixed plastics is defined as the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

A polymer blend is a mixture of two or more polymeric components. In general, the blend can be prepared by mixing the two or more polymeric components. A suitable mixing procedures known in the art is post-polymerization blending. Post-polymerization blending can be dry blending of polymeric components such as polymer powders and/or compounded polymer pellets or melt blending by melt mixing the polymeric components.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

A polypropylene means a polymer being composed of units derived from propylene in an amount of more than 50 mol-%.

A polyethylene means a polymer being composed of units derived from ethylene in an amount of more than 50 mol-%.

The term "elastomer" denotes a natural or synthetic polymer having elastic properties. The term "plastomer" denotes a natural or synthetic polymer having which combines qualities of elastomers and plastics, such as rubber-like properties with the processing ability of plastic. An ethylene based plastomer means a plastomer being composed of units derived from ethylene in an amount of more than 50 mol%.

The presence of a heterophasic nature can be easily determined by the number of glass transition points, like in dynamic-mechanical analysis (DMA), and/or high resolution microscopy, like scanning electron microscopy (SEM), transmission electron microscopy (TEM) or atomic force microscopy (AFM).

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

## Summary of the invention

The present invention relates to a composition suitable for automotive applications obtainable by blending at least components (A), (B), (C) and (D)

(A) 15 wt.-% to 45 wt.-%, preferably 18 to 44 wt.-%, more preferably 20 to 40 wt.-% of a mixed-plastics polypropylene blend;
(B) 15 wt.-% to 45 wt.-%, preferably 20 to 44 wt.-%, more preferably 35 to 43 wt.-% of a heterophasic propylene copolymer;
(C) 10 wt.-% to 25 wt.-%, preferably 11 to 24 wt.-%, more preferably 12 to 23 wt.-% of an ethylene-based plastomer and
(D) 10 wt.-% to 25 wt.-%, preferably 11 to 22 wt.-%, more preferably 12 to 20 wt.-% of an inorganic filler;

wherein all percentages refer to the total composition,
wherein the combined amount of the components (A), (B), (C) and (D) is more than 85 wt.-% based on the total weight of the composition,
wherein the mixed-plastics polypropylene blend (A) has

- a melt flow rate $MFR_2$ (230°C, 2.16 kg, ISO 1133) of 70 to 200 g/lOmin, preferably 75 to 170 g/lOmin,
- a soluble fraction (SF) content determined according to crystallisation extraction analysis (CRYSTEX) in the range of from 4.0 to 15.0 wt.-%, preferably in the range of from 4.5 to 13.5 wt.-%; and
- said soluble fraction (SF) has an intrinsic viscosity (iV(SF)), determined according to crystallisation extraction analysis (CRYSTEX) , in the range of from 0.5 to 1.4 dl/g, preferably in the range of from 0.6 to 1.1 dl/g;

the heterophasic propylene copolymer (B) comprises a matrix phase and an elastomer phase dispersed therein and has

- a melt flow rate $MFR_2$ (230°C, 2.16 kg, ISO 1133) of 85 to 250 g/lOmin, preferably 90 to 150 g/lOmin, more preferably 95 to 125 g/10min;
- a soluble fraction (SF) content determined according to crystallisation extraction analysis (CRYSTEX) in the range of from 18.0 wt.-% to 30.0 wt.-%; and
- an intrinsic viscosity of said soluble fraction iV(SF), determined according to crystallisation extraction analysis (CRYSTEX), of 2.0 dl/g to 4.5 dl/g, preferably of 2.4 to 3.8 dl/g, more preferably of 2.5 to 3.7 dl/g;

the ethylene based plastomer (C) being a copolymer of ethylene with comonomer units selected from alpha-olefins having from 4 to 10 carbon atoms, preferably from alpha-olefins having from 4 to 8 carbon atoms, most preferably from 1-butene, has

- a melt flow rate $MFR_2$ (190°C, 2.16 kg, ISO 1133) of 0.1 to 2.0 g/lOmin, preferably 0.2 to 1.0 g/10min; and
- a density of 850 to 870 kg/m$^3$, preferably from 855 to 865 kg/m$^3$; and

the composition has a melt flow rate $MFR_2$ (230°C, 2.16 kg, ISO 1133) of 20 to 60 g/10min, preferably 22 to 48 g/10min, more preferably 25 to 45 g/10min.

Further, the present invention relates to a heterophasic polypropylene composition suitable for automotive applications comprising a mixed-plastic polypropylene blend, characterized in that the composition has

- a melt flow rate MFR$_2$ (230°C, 2.16 kg, ISO 1133) of 20 to 60 g/lOmin, preferably 22 to 48 g/lOmin, more preferably 25 to 45 g/10min,
- a soluble fraction (SF) content determined according to crystallisation extraction analysis (CRYSTEX) in the range of 25.0 to 42.0 wt.-%, preferably of 30.0 to 38.0 wt.-%,
- a crystalline fraction (CF) content determined according to crystallisation extraction analysis (CRYSTEX) in the range of from 58.0 to 75.0 wt.-%, preferably in the range of from 62.0 to 70.0 wt.-%,
- an ethylene content of said soluble fraction (C2(SF)), as determined by FT-IR spectroscopy calibrated by quantitative $^{13}$C-NMR spectroscopy, in the range of from 45.0 to 75.0 wt.-%, preferably in the range of from 50.0 to 68.0 wt.-%,
- an intrinsic viscosity of said crystalline fraction (iV(CF)), determined according to crystallisation extraction analysis (CRYSTEX), of less than 1.25 dl/g, preferably in the range of 0.90 to 1.20 dl/g,
- a ratio between the intrinsic viscosity of the soluble fraction (iV(SF)) and the intrinsic viscosity of the crystalline fraction (iV(CF)) of more than 1.90, preferably in the range of 1.91 to 2.50, more preferably of 2.09 to 2.40, and
- a limonene content, determined by solid phase microextraction (HS-SPME-GC-MS), in the range of from 0.10 to 25.0 ppm.

Yet further, the present invention relates to an article, preferably a moulded article, more preferably a moulded automotive article comprising the composition as described above or below or the heterophasic polypropylene composition as described above or below.

Still further, the present invention relates to the use of the composition as described above or below or the heterophasic polypropylene composition as described above or below for injection molding of articles, preferably automotive articles, more preferably automotive exterior articles.

Further, the present invention relates to an apparatus for tiger line detection on an article, in particular a moulded article comprising:

- a black box, wherein the black box comprises a black-painted cabinet;
- an article holder, disposed within the cabinet, configured to hold the article;
- a light-emitting diode, LED, light source, disposed within the cabinet, being configured to illuminate the article with LED light; wherein the LED light source provides the LED light to the article at an angle of at least -90°;

    wherein the LED light source has a beam angle of 15° to 25°, preferable, 18° to 22°, more preferable 20°,
    wherein the LED light source comprises a distributed LED plate with a camera hole, in particular a central camera hole;

- a camera, in particular a charge coupled device, CCD, camera;

    wherein the LED light source and the camera are positioned in line with the article;
    wherein the LED light source is disposed between the camera and the article holder;
    wherein the camera is configured to take a picture of the article through the camera hole;
    wherein a distance between the camera, and the article is at least 1200 mm, preferable 1500 mm, more preferable 1700 mm;

- a processing unit, configured to process the picture of the article for tiger line detection, in particular by analyzing the whole taken picture, further in particular wherein analyzing the whole taken picture comprises dividing the picture into at least three equal sections.

Preferably, the camera is configured to take a picture with a resolution of at least 1816 × 588 Pixel, wherein further preferably the picture resolution of the article has a resolution of 4,28 pixel /mm.

## Brief description of figures

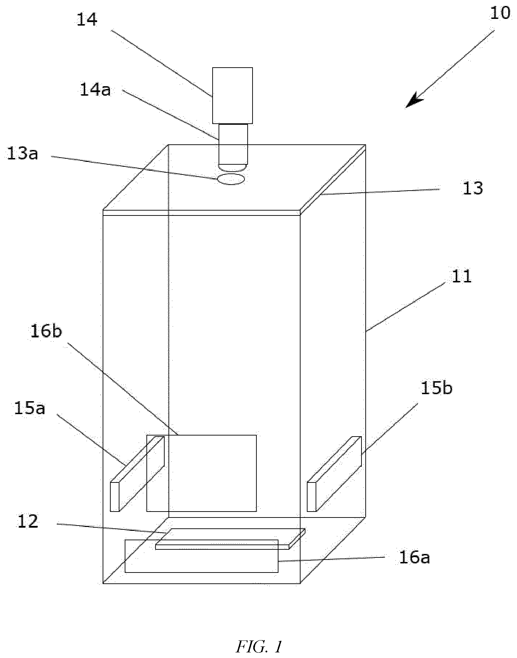

In the following, the invention is described with reference to the appended figure, wherein
Fig. 1 schematically shows an apparatus for tiger line detection on an article.

## Description of the embodiment

Fig. 1 describes an apparatus for tiger line detection on an article, in particular a moulded article comprising the following: A black box 11, wherein the black box 11 comprises a black-painted cabinet. An article holder 12, disposed within the cabinet, configured to hold the article. A light-emitting diode, LED, light source 13, disposed within the cabinet, being configured to illuminate the article with LED light, wherein the LED light source 13 which provides the LED light to the article has a beam angle of at least 20°, wherein the LED light source 13 comprises a distributed LED plate with a camera hole 13a, in particular a central camera hole. A camera 14, in particular a charge coupled device, CCD, camera. The LED light source 13 and the camera 14 are positioned in line with the article and as such the article holder 12 in a vertical direction; wherein the LED light source 13 is disposed between the camera 14 and the article holder 12 in a vertical direction. The article holder 12 is in this case considered to be on the bottom of the black box 11, wherein the LED light source 13 is disposed on the top of the black box 11. The camera 14 is configured to take a picture of the article through the camera hole 13a. The picture has a resolution of at least 4,28 pixels/mm. The apparatus further comprises a processing unit, configured to process the picture of the article for tiger line detection, in particular by analyzing the whole taken picture, further in particular wherein analyzing the whole taken picture comprises dividing the picture into at least three equal sections.

The apparatus 10 further comprises at least two low angle LED plates 15a, 15b, disposed at opposing sides within the cabinet between the LED light source 13 and the article holder 12, in particular closer to the article holder 12 than the LED light source 13, wherein the at least two low angle LED plates 15a, 15b are configured to illuminate the article with low angle LED light, wherein in particular the low angle is 5° or lower.

In this case, the LED light source 13 is disposed at a top surface of the black box 11. Alternatively, the LED light source 13 forms the top surface of the black box. The LED light source 13 for example is a Hled36-spotlight.

The camera 14 comprises a camera lens 14a, wherein the camera lens 14 is dimensioned in a way that the camera 14 is capable of taking the picture of the article through the camera hole 13a. The camera lens for example has a focal length of 25 millimetres or lower. The camera for example has a resolution of 5 megapixels or higher with a grey scale resolution of 8 bits. The camera 14 for example is a IDS U3-3280CP-M-GL Rev.2.2. USB camera with a FUJ,HF25-Xa-5M,25mm,2/3" lens. Preferably, the camera 14 is configured to take a picture with a resolution of at least $1816 \times 588$ Pixel.

The low angled LED plates 15a, 15b allow the processing unit to perform an additional measurement on the same setup. In other words, a first measurement is performed with a first lighting mode, illuminating the article with the LED light source 13 and a second measurement is performed with a second lighting mode, illuminating the article with the low angled LED plates 15a, 15b. The low angled LED plates 15a, 15b are also referred to as dark field light array. Preferably, the low angled LED plates 15a, 15b are rotatable in a vertical direction. For example, the low angled LED plates 15a, 15b are 30-Xled-3-SL-46w.

A distance between the LED light source 13 and the article holder 12 is at least 1200 millimetres, preferable 1500 millimetres, more preferably 1700 millimetres. The black box 11 comprises a width of at least 360 millimetres and a length of at least 800 millimetres. The low angled LED plates 15a, 15b are disposed at least 200 millimeters above the article holder 12. Further, the low angled LED plates 15a, 15b are distanced to each other by at least 700 millimeters.

The black box 11 further comprises an operator opening 16b at one side surface that allows an operator to reach into the black box 11. In addition, the black box 11 further comprises a drawer 16a with limit stops for introducing the article into the black box 11.

The picture taken of the article comprises an area of at least 290 mm $\times$ 135 mm. with a resolution of at least 4,28 pixels per mm. Wherein the grey value of 20 corresponds to a density of 1,64 in a TE165 grey scale test chart, the grey value of 48 corresponds to a density of 1,34 in a TE165 grey scale test chart, the grey value of 90 corresponds to a density of 1,08 in a TE165 grey scale test chart, the grey value of 139 corresponds to a density of 0,88 in a TE165 grey scale test chart, the grey value of 250 corresponds to a density of 0,70 in a TE165 grey scale test chart.

The processing unit is configured to use all raw images for the tiger stripes analysis instead of using single lines along the height of the image. The raw image is passed first 10 times via a Gaussian filter with a kernel size of 7. Later it is passed 2 times via POpen gray Morphology transformation, a POpen implies a succession of seven openings and closings operation. For the POpen transformation a structuring element of $3 \times 3$ is used with all the elements equal to 1. Finally, each horizontal line along the long axes of the picture is fitted with a 6th order polynomial. For fitted line a mean squared error (MSE) is obtain. The mean, or in other words average, of all MSE is used as the tiger stripe indicator MSE. Furthermore, the processing unit is configured to divide the measurements into three equal sections, for example near the drawer 16a, mid-distance to the drawer 16a and far from the drawer 16. This allows to better characterize the tiger stripes.

**Detailed description**

Composition

In a first aspect, the present invention relates to a composition suitable for automotive applications obtainable by blending at least components (A), (B), (C) and (D)

(A) 15 wt.-% to 45 wt.-%, preferably 18 to 44 wt.-%, more preferably 20 to 40 wt.-% of a mixed-plastics polypropylene blend;

(B) 15 wt.-% to 45 wt.-%, preferably 20 to 44 wt.-%, more preferably 35 to 43 wt.-% of a heterophasic propylene copolymer;
(C) 10 wt.-% to 25 wt.-%, preferably 11 to 24 wt.-%, more preferably 12 to 23 wt.-% of an ethylene-based plastomer and
(D) 10 wt.-% to 25 wt.-%, preferably 11 to 22 wt.-%, more preferably 12 to 20 wt.-% of an inorganic filler;

wherein all percentages refer to the total composition,
wherein the combined amount of the components (A), (B), (C) and (D) is more than 85 wt.-% based on the total weight of the composition,
wherein the mixed-plastics polypropylene blend (A) has

- a melt flow rate $MFR_2$ (230°C, 2.16 kg, ISO 1133) of 70 to 200 g/lOmin, preferably 75 to 170 g/lOmin,
- a soluble fraction (SF) content determined according to crystallisation extraction analysis (CRYSTEX) in the range of from 4.0 to 15.0 wt.-%, preferably in the range of from 4.5 to 13.5 wt.-%; and
- said soluble fraction (SF) has an intrinsic viscosity (iV(SF)), determined according to crystallisation extraction analysis (CRYSTEX) , in the range of from 0.5 to 1.4 dl/g, preferably in the range of from 0.6 to 1.1 dl/g;

the heterophasic propylene copolymer (B) comprises a matrix phase and an elastomer phase dispersed therein and has

- a melt flow rate $MFR_2$ (230°C, 2.16 kg, ISO 1133) of 85 to 250 g/lOmin, preferably 90 to 150 g/lOmin, more preferably 95 to 125 g/10min;
- a soluble fraction (SF) content determined according to crystallisation extraction analysis (CRYSTEX) in the range of from 18.0 wt.-% to 30.0 wt.-%; and
- an intrinsic viscosity of said soluble fraction iV(SF), determined according to crystallisation extraction analysis (CRYSTEX), of 2.0 dl/g to 4.5 dl/g, preferably of 2.4 to 3.8 dl/g, more preferably of 2.5 to 3.7 dl/g;

the ethylene based plastomer (C) being a copolymer of ethylene with comonomer units selected from alpha-olefins having from 4 to 10 carbon atoms, preferably from alpha-olefins having from 4 to 8 carbon atoms, most preferably from 1-butene, has

- a melt flow rate $MFR_2$ (190°C, 2.16 kg, ISO 1133) of 0.1 to 2.0 g/lOmin, preferably 0.2 to 1.0 g/10min; and
- a density of 850 to 870 $kg/m^3$, preferably from 855 to 865 $kg/m^3$; and

the composition has a melt flow rate $MFR_2$ (230°C, 2.16 kg, ISO 1133) of 20 to 60 g/10min, preferably 22 to 48 g/10min, more preferably 25 to 45 g/10min.

In order to characterize the matrix (crystalline) phase and the dispersed (amorphous) phase of a composition several methods are known. One method is the crystallization extraction (CRYSTEX).

This method is described below in the determination methods section. Thereby, the polymeric part of a composition is characterized using trichlorobenzene (TCB) as a solvent. The obtained crystalline fraction (CF) consists essentially of the majority of the matrix phase and, if present, the crystalline part of the dispersed phase, while the obtained soluble fraction (SF) consists essentially of the majority of the dispersed phase and, if present, the amorphous part of the matrix phase. Due to the differences in the separation methods of xylene extraction and crystallization extraction (CRYSTEX) the properties of XCS/XCI fractions on the one hand and crystalline/soluble (CF/SF) fractions on the other hand are not exactly the same, meaning that the amounts can differ as well as the properties. Generally, the crystalline fraction (CF) content and the soluble fraction (SF) content of a composition only relate to its polymeric components, i.e. without other components, which are insoluble and therefore not part of the dissolution and crystallization cycles as described below in the determination method.

Due to the nature of the crystallisation extraction analysis (CRYSTEX), the combined amount of soluble fraction (SF) content and crystalline fraction (CF) content adds up to 100 wt.-% of the polymeric components.

The crystalline and amorphous polymeric parts of the composition of the invention are characterized by the crystallization extraction (CRYSTEX) method.

The composition preferably has a crystalline fraction (CF) content, determined according to crystallisation extraction analysis (CRYSTEX) in the range of from 55.0 to 80.0 wt.-%, more preferably in the range of from 58.0 to 75.0 wt.-%.

Accordingly, the soluble fraction (SF) content of the composition, determined according to crystallisation extraction analysis (CRYSTEX) is preferably in the range of from 20.0 to 45.0 wt.-%, more preferably in the range of from 25.0 to 42.0 wt.-%.

The intrinsic viscosity of said crystalline fraction (iV(CF)), determined according to crystallisation extraction analysis (CRYSTEX), is preferably less than 1.25 dl/g, more preferably in the range of 0.90 to 1.20 dl/g.

The ratio between the intrinsic viscosity of the soluble fraction (iV(SF)) and the intrinsic viscosity of the crystalline fraction (iV(CF)) of the composition is preferably more than 1.80, more preferably in the range of 1.90 to 2.50, yet more preferably in the range of 2.09 to 2.40.

The intrinsic viscosity of the soluble fraction (iV(SF)), determined according to crystallisation extraction analysis (CRYSTEX), of the composition is preferably more than 2.00 dl/g, more preferably in the range of 2.05 to 3.00 dl/g.

Besides the intrinsic viscosity, the soluble fraction (SF) and crystalline fraction (CF), can also be characterized by the ethylene content of said fractions.

It is preferred, that the soluble fraction (SF) of the composition has an ethylene content (C2(SF)), as determined by FT-IR spectroscopy calibrated by quantitative $^{13}$C-NMR spectroscopy, in the range of from 45.0 to 75.0 wt.-%, more preferably in the range of from 50.0 to 70.0 wt.-%.

Preferably, the crystalline fraction (CF) of the composition has an ethylene content (C2(CF)), as determined by FT-IR spectroscopy calibrated by quantitative $^{13}$C-NMR spectroscopy, in the range of from 1.0 to 10.0 wt.-%, more preferably in the range of from 2.0 to 7.0 wt.-%.

The composition according to the invention preferably shows a good balance of properties in regard of impact properties, heat stability, flowability, as can be seen from the melt flow rate described above, and especially mechanical properties, such as in in regard of the flexural modulus.

The composition preferably has a Flexural modulus of from 1400 MPa to 2000 MPa, preferably from 1450 MPa to 1950 MPa.

The composition preferably has very good impact strength in the instrumented puncture test:
The composition preferably has a puncture energy, measured at 23°C, of from 25 to 55 J, more preferably from 30 to 50 J.

The composition preferably has an energy at maximum force, measured at 23°C, of from 10 to 30 J, preferably from 11 to 28 J.

Further, the composition preferably has a puncture energy, measured at -30°C, of from 20 to 50 J, more preferably from 25 to 45 J.

The composition of the invention mandatorily comprises components (A), (B), (C) and (D) as described above or below in the accordantly described amounts.

The composition can optionally comprise additional polymeric components so that the composition may be obtainable by blending components (A), (B), (C), (D) and a second heterophasic propylene copolymer (E).

In this embodiment, (E) is present in an amount of 5 to 15 wt.-%, preferably 8 to 12 wt.-%, based on the total weight of the composition.

Further, component (E) is a heterophasic propylene copolymer comprising a matrix phase and an elastomer phase dispersed therein and having a melt flow rate $MFR_2$ (230°C, 2.16 kg, ISO 1133) of 2 to 10 g/lOmin, preferably 3 to 8 g/lOmin, more preferably 3.5 to 7.5 g/lOmin.

The soluble fraction (SF) content of the second heterophasic propylene copolymer (E), determined according to crystallisation extraction analysis (CRYSTEX) is preferably more than 15.0 to 30.0 wt.-%, more preferably is in the range of 18.0 to 25.0 wt.-%.

Further, the intrinsic viscosity of said soluble fraction iV(SF) of the second heterophasic propylene copolymer (E), determined according to crystallisation extraction analysis (CRYSTEX) is preferably in the range of 4.0 dl/g to 10.0 dl/g, more preferably of 4.5 to 8.0 dl/g, yet more preferably of 5.1 to 5.8 dl/g.

In another embodiment, the composition can optionally comprise additional polymeric components so that the composition may be obtainable by blending components (A), (B), (C), (D) and a propylene homopolymer (F).

In this embodiment, the propylene homopolymer (F) is present in the composition in an amount of 5 to 12 wt.-%, preferably 6 to 10 wt.-%.

Further, the propylene homopolymer (F) is a high flow propylene homopolymer having a melt flow rate $MFR_2$ (230°C, 2.16 kg, ISO 1133) of 800 to 2000 g/lOmin, preferably 900 to 1600 g/10 min, more preferably 1000 to 1500 g/10 min.

Preferably, the intrinsic viscosity, determined according to crystallisation extraction analysis (CRYSTEX) of the propylene homopolymer (F) is less than 1.0 dl/g, more preferably in the range of 0.5 to 0.9 dl/g.

In the following chapters, preferred embodiments of the components (A), (B), (C), (D), (E) and (F) are described.

Mixed-plastics polypropylene blend (A)

The mixed-plastics polypropylene blend (A) has

- a melt flow rate $MFR_2$ (230°C, 2.16 kg, ISO 1133) of 70 to 200 g/lOmin, preferably 75 to 170 g/lOmin,
- a soluble fraction (SF) content determined according to crystallisation extraction analysis (CRYSTEX) in the range of from 4.0 to 15.0 wt.-%, preferably in the range of from 4.5 to 13.5 wt.-%; and

- said soluble fraction (SF) has an intrinsic viscosity (iV(SF)), determined according to crystallisation extraction analysis (CRYSTEX) , in the range of from 0.5 to 1.4 dl/g, preferably in the range of from 0.6 to 1.1 dl/g.

The mixed-plastics polypropylene blend (A) can be further characterized by its polydispersity ($M_w/M_n$).

It is preferred, that the mixed-plastics polypropylene blend (A) has a polydispersity ($M_w/M_n$) determined by Gel Permeation Chromatography (GPC) in the range of 2.0 to 7.0, more preferably of 4.0 to 6.5.

Typically, the melt flow rate $MFR_2$ of commercial mixed-plastics polypropylene blends originating from post-consumer waste and/or industrial waste is lower than the $MFR_2$ described above or below for the mixed-plastics polypropylene blend (A) and the polydispersity ($M_w/M_n$) typically higher.

One way of increasing the $MFR_2$ while narrowing the polydispersity ($M_w/M_n$) is by vis-breaking the mixed-plastics polypropylene blend.

Vis-breaking is a post reactor chemical process for modifying semi-crystalline polymers such as propylene polymers. During the vis-breaking process, the propylene polymer backbone is degraded, for example by means of peroxides, such as organic peroxides, via beta scission.

Accordingly, it is preferred that the mixed-plastics polypropylene blend (A) is a vis-broken mixed-plastics polypropylene blend and contains peroxide(s) or decomposition products of peroxide(s).

The crystalline fraction (CF) of the mixed-plastics polypropylene blend (A) has preferably an intrinsic viscosity (iV(CF)), determined according to crystallisation extraction analysis (CRYSTEX) in the range of from 0.9 to 1.4 dl/g, preferably in the range of from 1.0 to 1.3 dl/g.

The ratio between the intrinsic viscosity of the soluble fraction (iV(SF)) and the intrinsic viscosity of the crystalline fraction (iV(CF)) of the mixed-plastics polypropylene blend (A) is preferably in the range of 0.5 to 1.0, more preferably in the range of 0.70 to 0.85.

It is preferred, that the soluble fraction (SF) of the mixed-plastics polypropylene blend (A) has an ethylene content (C2(SF)), as determined by FT-IR spectroscopy calibrated by quantitative $^{13}$C-NMR spectroscopy, in the range of from 20.0 to 35.0 wt.-%, more preferably in the range of from 25.0 to 30.0 wt.-%.

Preferably, the crystalline fraction (CF) of the mixed-plastics polypropylene blend (A) has an ethylene content (C2(CF)), as determined by FT-IR spectroscopy calibrated by quantitative $^{13}$C-NMR spectroscopy, in the range of from 1.0 to 8.0 wt.-%, more preferably in the range of from 2.0 to 7.0 wt.-%.

The mixed-plastics polypropylene blend (A) preferably comprises units derived from propylene in an amount of more than 50 mol%.

The mixed-plastics polypropylene blend (A) preferably comprises units derived from ethylene (C2), determined by FT-IR spectroscopy calibrated by quantitative $^{13}$C-NMR spectroscopy, in an amount of from 2.5 to 15.0 wt.-%, more preferably from 4.0 to 12.5 wt.-%, still more preferably from 5.0 to 10.0 wt.-%.

The mixed-plastic polypropylene blend (A) preferably is a recycled material originating from post-consumer waste.

Further, the mixed-plastics polypropylene blend (A) preferably has a limonene content as determined by using solid phase microextraction (HS-SPME-GC-MS) of in the range of 1.0 to 25.0 ppm, more preferably of 5.0 to 20.0 ppm.

The mixed-plastics polypropylene blend (A) preferably has one or both of the following properties:

- a Flexural modulus, determined according to ISO 178, of from 1000 MPa to 1500 MPa, preferably from 1100 MPa to 1400 MPa; and/or
- a Charpy Notched Impact Strength at 23°C (NIS at 23°C) determined according to ISO 179-1 eA of from 3.0 to 7.5 kJ/m[2], preferably from 4.0 to 7.0 kJ/m[2].

The mixed-plastics polypropylene blend according to the present invention is preferably present in the form of pellets.

Heterophasic propylene copolymer (B)

The heterophasic propylene copolymer (B) is characterized by

- a melt flow rate $MFR_2$ (230°C, 2.16 kg, ISO 1133) of 85 to 250 g/10min, preferably of 90 to 150 g/10min, more preferably of 95 to 125 g/10min;
- a soluble fraction (SF) content determined according to crystallisation extraction analysis (CRYSTEX) in the range from 18.0 wt.-% to 30.0 wt.-%, preferably from 19.0 to 28.0 wt.-%, more preferably from 20.0 to 26.0 wt.-%; and
- an intrinsic viscosity of said soluble fraction iV(SF), measured in decalin according to DIN ISO 1628/1 at 135°C, of 2.1 dl/g to 4.5 dl/g, preferably of 2.4 to 3.8 dl/g, more preferably of 2.5 to 3.7 dl/g.

The heterophasic propylene copolymer (B) can be further characterized by the following properties.

The heterophasic propylene copolymer (B) preferably has a content of units derived from ethylene in the soluble fraction (C2(SF)), as determined by FT-IR spectroscopy calibrated by quantitative $^{13}$C-NMR spectroscopy, of 20 to 40 wt.-%, more preferably of 27 to 39 wt.-%, yet more preferably of 32 to 38 wt.-%.

The content of units derived from ethylene (C2) in the crystalline fraction (C2(CF)) of the heterophasic propylene copolymer (B), as determined by FT-IR spectroscopy calibrated by quantitative $^{13}$C-NMR spectroscopy, is preferably in the range of 0.1 to 5.0 wt.-%, more preferably of 0.2 to 4.0 wt.%, yet more preferably of 0.5 to 3.0 wt%.

The total content of units derived from ethylene (C2) in the heterophasic propylene copolymer (B) is preferably in the range of 5.0 to 15.0 wt.-%, preferably of 6.0 to 12.0 wt.%, more preferably of 7.0 to 11.0 wt%.

The intrinsic viscosity of the crystalline fraction iV(CF), according to crystallisation extraction analysis (CRYSTEX) is preferably in the range of 0.5 to 2.0 dl/g, preferably of 0.7 to 1.3 dl/g.

Preferably, the heterophasic propylene copolymer (B) has a Flexural modulus, determined according to ISO 178, in the range of from 1100 MPa to 1700 MPa, preferably from 1200 MPa to 1500 MPa, more preferably from 1300 to 1400 MPa.

Preferably, the heterophasic propylene copolymer (B) has a Charpy Notched Impact Strength at 23°C (NIS at 23°C), determined according to ISO 179-1 eA of from 4.0 to 8.5 kJ/m$^2$, preferably from 5.0 to 7.0 kJ/m$^2$.

It is preferred that the heterophasic propylene copolymer (B) consists of propylene units and ethylene units.

Although not measured the content of units derived from propylene (C3) in the soluble fraction (SF) preferably adds up to 100 wt.-% with the content of units derived from ethylene (C2) in the soluble fraction (SF).

The crystallizatuin temperature $T_c$, determined by differential scanning calorimetry (DSC), of the heterophasic propylene copolymer (B) is preferably in the range of 120 to 140 °C, more preferably 125 to 135 °C.

Such heterophasic propylene copolymers are commercially available.

Ethylene-based plastomer (C)

The ethylene based plastomer (C) is a copolymer of ethylene with comonomer units selected from alpha-olefins having from 4 to 10 carbon atoms, preferably from alpha-olefins having from 4 to 8 carbon atoms, most preferably from 1-butene.

The ethylene based plastomer (C) is further characterized by having melt flow rate MFR$_2$ (190°C, 2.16 kg, ISO 1133) in the range of 0.1 to 2.0 g/lOmin, preferably of 0.2 to 1.0 g/lOmin.

Further, the density, determined according to ISO 1183-187, of the ethylene based plastomer (C) is in the range of 850 to 870 kg/m$^3$, preferably of 855 to 865 kg/m$^3$.

In a preferred embodiment, the ethylene based plastomer (C) is an ethylene 1-butene copolymer having a MFR$_2$ (190°C, 2.16 kg, ISO 1133) in the range of 0.1 to 1.0 g/10min and a density in the range of 855 to 865 kg/m$^3$.

Such an ethylene based plastomer (C) can increase the intrinsic viscosity of the soluble fraction iV(SF) of the composition.

Such ethylene-based plastomers are commercially available under the tradenames Engage, Exact, Queo, Tafmer or others.

Inorganic Filler (D)

The inorganic filler (D) is preferably talc.

Talc 1 was Jetfine 3CA with a $d_{50}$ of 1.2 $\mu$m and a $d_{95}$ of 3.3 $\mu$m (Sedigraph measurement), commercially available from IMERYS, France.

The inorganic filler, preferably talc, (D) preferably has a median particle size $d_{50}$, according to sedigraph measurement, before compounding of 0.3 to 30.0 micrometers, more preferably 0.5 to 15.0 micrometers.

Further, the inorganic filler, preferably talc, (D) preferably has a top-cut particle size $d_{95}$, according to sedigraph measurement, before compounding of 1.0 to 50.0 micrometers, preferably 1.5 to 35.0 micrometers.

Such inorganic fillers are commercially available.

Additives

Additives are commonly used in the composition according to the present invention. Preferably, the additives are selected from one or more of antioxidant(s), UV stabilizer(s), slip agent(s), nucleating agent(s), pigment(s), lubricant(s), masterbatch polymer(s) and/or anti-fogging agents.

Additives are usually present in the composition in an amount of from 0.01 to 4.0 wt.-%, preferably in an amount of 0.05 to 3.5 wt.-%, based on the total composition.

Second heterophasic propylene copolymer (E)

The optional heterophasic polypropylene copolymer (E) comprises a matrix phase and an elastomer phase dispersed therein.

The second heterophasic propylene copolymer (E), if present in the composition, preferably has a melt flow rate which is lower than the melt flow rate of the heterophasic propylene copolymer (B).

The optional second heterophasic propylene copolymer (E) has a melt flow rate $MFR_2$ (230°C, 2.16 kg, ISO 1133) of 2 to 10 g/lOmin, preferably of 3 to 8 g/lOmin, more preferably of 3.5 to 7.5 g/lOmin.

Further, the optional second heterophasic propylene copolymer (E) has a soluble fraction (SF) content determined according to crystallisation extraction analysis (CRYSTEX) in the range of more than 15.0 to 30.0 wt.-%, preferably of 18.0 to 25.0 wt.-%.

Said soluble fraction preferably has an intrinsic viscosity iV(SF), determined according to crystallisation extraction analysis (CRYSTEX), of 4.0 dl/g to 10.0 dl/g, preferably 4.5 to 8.0 dl/g, more preferably 5.1 to 5.8 dl/g.

The optional second heterophasic propylene copolymer (E) preferably has a crystalline fraction (CF) content determined according to crystallisation extraction analysis (CRYSTEX) in the range of from 70.0 to 85.0 wt.-%, preferably in the range from 75.0 to 82.0 wt.-%.

Preferably, the optional second heterophasic propylene copolymer (E) has one or more, preferably all, of the following properties:

- a content of units derived from ethylene (C2) in the soluble fraction (C2(SF)), determined according to crystallisation extraction analysis (CRYSTEX), of 15 to 30 wt.-%, preferably of 20 to 25 wt.-%; and/or
- a content of units derived from ethylene (C2) in the crystalline fraction (C2(CF)) of 0.5 to 7.5 wt.-%, preferably of 1.0 to 5.0 wt.%, more preferably of 1.5 to 4.0 wt%; and/or
- a total content of units derived from ethylene of 4.0 to 15.0 wt.-%, preferably of 5.0 to 10.0 wt.%, more preferably of 6.0 to 7.0 wt%; and/or
- an intrinsic viscosity of the crystalline fraction iV(CF), determined according to crystallisation extraction analysis (CRYSTEX), in the range of 1.5 to 2.5 dl/g, preferably in the range of 1.8 to 2.2 dl/g.

It is preferred that the optional heterophasic propylene copolymer (E) consists of propylene units and ethylene units.

Although not measured the content of units derived from propylene (C3) in the soluble fraction (SF) preferably adds up to 100 wt.-% with the content of units derived from ethylene (C2) in the soluble fraction (SF).

The optional heterophasic propylene copolymer (E) preferably has a Flexural modulus of from 800 MPa to 1200 MPa, preferably from 850 MPa to 1150 MPa.

Further, the optional heterophasic propylene copolymer (E) preferably has a Charpy Notched Impact Strength at 23 °C (NIS, 23 °C) of from 25 to 75 $kJ/m^2$, more preferably from 35 to 60 $kJ/m^2$.

Such heterophasic propylene copolymers are commercially available.

Propylene homopolymer (F)

The optional propylene homopolymer (F) preferably has a very high melt flow rate $MFR_2$ (230°C, 2.16 kg, ISO 1133) of 800 to 2000 g/10min, preferably of 900 to 1600 g/10 min, more preferably of 1000 to 1500 g/10 min.

Preferably, the intrinsic viscosity, determined according to crystallisation extraction analysis (CRYSTEX) of the propylene homopolymer (F) is less than 1.0 dl/g, more preferably in the range of 0.5 to 0.9 dl/g.

Further, the optional propylene homopolymer (F) preferably has a melting temperature Tm, determined by DSC according to ISO 11357-3, of from 150 to 170°C, preferably from 155 to 166°C.

Such propylene homopolymers can be used to reduce the intrinsic viscosity of the crystalline fraction iV(CF) of the composition.

Such propylene homopolymers are commercially available.

Heterophasic polypropylene composition

While the composition described above is inter alia characterized by the components that are used to obtain the composition by blending, the following aspect refers to a heterophasic polypropylene composition in itself.

The inventive heterophasic polypropylene composition suitable for automotive applications comprising a mixed-plastic polypropylene blend, is characterized by having

- a melt flow rate $MFR_2$ (230°C, 2.16 kg, ISO 1133) of 20 to 60 g/lOmin, preferably 22 to 48 g/lOmin, more preferably 25 to 45 g/lOmin,

- a soluble fraction (SF) content determined according to crystallisation extraction analysis (CRYSTEX) in the range of 25.0 to 42.0 wt.-%, preferably of 30.0 to 38.0 wt.-%,
- a crystalline fraction (CF) content determined according to crystallisation extraction analysis (CRYSTEX) in the range of from 58.0 to 75.0 wt.-%, preferably in the range of from 62.0 to 70.0 wt.-%,
- an ethylene content of said soluble fraction (C2(SF)), as determined by FT-IR spectroscopy calibrated by quantitative $^{13}$C-NMR spectroscopy, in the range of from 45.0 to 75.0 wt.-%, preferably in the range of from 50.0 to 68.0 wt.-%,
- an intrinsic viscosity of said crystalline fraction (iV(CF)), determined according to crystallisation extraction analysis (CRYSTEX), of less than 1.25 dl/g, preferably in the range of 0.90 to 1.20 dl/g,
- a ratio between the intrinsic viscosity of the soluble fraction (iV(SF)) and the intrinsic viscosity of the crystalline fraction (iV(CF)) of more than 1.90, preferably in the range of 1.91 to 2.50, more preferably of 2.09 to 2.40, and
- a limonene content, determined by solid phase microextraction (HS-SPME-GC-MS), in the range of from 0.10 to 25.0 ppm.

Further, the heterophasic polypropylene composition preferably is characterized in that

- the crystalline fraction (CF) of the composition has an ethylene content (C2(CF)), as determined by FT-IR spectroscopy calibrated by quantitative $^{13}$C-NMR spectroscopy, in the range of from 2.0 to 7.0 wt.-%, and
- the soluble fraction (SF) of the composition has an intrinsic viscosity (iV(SF)), determined according to crystallisation extraction analysis (CRYSTEX), of more than 2.0 dl/g, preferably in the range of from 2.1 to 2.8 dl/g.

Article

In another aspect, the present invention relates to an article, preferably a moulded article, more preferably a moulded automotive article comprising the composition as described above or below or the heterophasic polypropylene composition as described above or below.

The article is preferably used on the exterior of vehicles.

The article preferably shows a mean square error (MSE), commonly denoted as tiger stripes, surface quality at a filling time of 1.5 s below 10.0, preferably from 2.0 to 9.0, more preferably from 3.0 to 8.5, determined as described in the experimental section.

Use

In yet another aspect the present invention relates to the use of the composition as described above or below or the heterophasic polypropylene composition as described above or below for injection molding of articles, preferably automotive articles, more preferably automotive exterior articles.

Apparatus

In a further aspect, the present invention relates to an apparatus for tiger line detection on an article, in particular a molded article comprising:

- a black box, wherein the black box comprises a black-painted cabinet;
- an article holder, disposed within the cabinet, configured to hold the article;
- a light-emitting diode, LED, light source, disposed within the cabinet, being configured to illuminate the article with LED light; wherein the LED light source provides the LED light to the article at an angle of at least 20°; wherein the LED light source comprises a distributed LED plate with a camera hole, in particular a central camera hole;
- a camera, in particular a charge coupled device, CCD, camera;

    wherein the LED light source and the camera are positioned in line with the article; wherein the LED light source is disposed between the camera and the article holder;
    wherein the camera is configured to take a picture of the article through the camera hole, and
    wherein a distance between the camera and the article is at least 1200 mm;

- a processing unit, configured to process the picture of the article for tiger line detection, in particular by analyzing the whole taken picture, further in particular wherein analyzing the whole taken picture comprises dividing the picture into at least three equal sections.

Preferably, the apparatus further comprises

- at least two low angle LED plates, disposed at opposing sides within the cabinet between the LED light source and the article holder, in particular closer to the article holder than the LED light source, wherein the at least two low angle LED plates are configured to illuminate the article with low angle LED light, wherein in particular the low angle is 5° or lower.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**1. Determination methods**

The following definitions of terms and determination methods apply for the above general description of the invention as well as to the below examples unless otherwise defined.

**Melt flow rate**

Melt flow rates were measured with a load of 2.16 kg ($MFR_2$) at 230 °C (polypropylene based materials) or at 190 °C (polyethylene based materials). The melt flow rate is that quantity of polymer in grams which the test apparatus standardized to ISO 1133 extrudes within 10 minutes at a temperature of 230 °C (or 190°C) under a load of 2.16 kg.

**Density**

Density was measured according to ISO 1183-187. Sample preparation was done by compression molding in accordance with ISO 1872-2:2007.

**Crystallization extraction (CRYSTEX)**

Note: Crystallization extraction (CRYSTEX) analyses the polymeric part of each component, with non-polymeric parts, such as any fillers or particulate pigments, not contributing to the reported CRYSTEX data presented.

**Determination of crystalline and soluble fractions and their respective properties (iV and Ethylene content)**

The crystalline (CF) and soluble fractions (SF) of the polypropylene (PP) compositions as well as the comonomer content and intrinsic viscosities of the respective fractions were analyzed by use of the Crystex (crystallisation extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentration expected during Crystex analyses the following calibration equations were applied:

$$\text{Conc} = a + b*\text{Abs(CH)} + c*(\text{Abs(CH)})^2 + d*\text{Abs(CH}_3) + e*(\text{Abs(CH}_3))^2 + f*\text{Abs(CH)}*\text{Abs(CH}_3) \qquad \text{(Equation 1)}$$

$$\text{CH}_3/1000\text{C} = a + b*\text{Abs(CH)} + c*\text{Abs(CH}_3) + d*(\text{Abs(CH}_3)/\text{Abs(CH)}) + e*(\text{Abs(CH}_3)/\text{Abs(CH)})^2 \qquad \text{(Equation 2)}$$

The constants a to f for equation 1 and a to e for equation 2 were determined by using least square regression analysis.

The $CH_3/1000C$ is converted to the ethylene content in wt.-% using following relationship:

$$\text{wt.-\% (Ethylene in EP Copolymers)} = 100 - CH_3/1000TC * 0.3 \qquad \text{(Equation 3)}$$

Amount of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. A linear calibration curve is used.

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP copolymers and PP polymers with iV = 2-4 dL/g. The determined calibration curve is linear.

The samples to be analyzed are weighed out in concentrations of 10 mg/ml to 20 mg/ml. After automated filling of the vial with 1,2,4-TCB containing 250 mg/l 2,6-tert-butyl-4-methylphenol (BHT) as antioxidant, the sample is dissolved at 170°C until complete dissolution is achieved with either constant stirring or gentle shaking. To avoid sample degradation, polymer solution is blanketed with the $N_2$ atmosphere during dissolution.

For PP composition containing inorganic fillers or pigments or any other non-TCB soluble polymeric substances removal of these is required. This can be done by hot filtration prior injection.

A defined volume of the polymer solution is injected into the column filled with inert support where the crystallization of the sample and separation of the soluble fraction from the crystalline fraction is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

**Charpy Notched Impact Strength (NIS)**
was determined according to ISO 179-1 eA at +23 °C and at -20 °C on injection molded specimens of $80 \times 10 \times 4$ mm$^3$ prepared according to EN ISO 1873-2. The measurement was done after 96 h conditioning time at 23 °C of the specimen.

**Flexural modulus**

The flexural modulus was determined according to ISO 178 at a test speed of 2 mm/min and a force of 100 N, whereby the length of the span between the supports was 64 mm, on test specimens having a dimension of $80 \times 10 \times 4$ mm$^3$ (length $\times$ width $\times$ thickness) prepared by injection moulding according to EN ISO 1873-2.

**Instrumented Puncture Test**

Instrumented puncture test was performed on $60 \times 60 \times 3$ mm$^3$ injection-molded plaques at 23°C and -30°C according to ISO6603-2:2000. The measurement was done after 96 h conditioning time at 23 °C of the specimen.

**DSC analysis, melting temperature ($T_m$) and crystallization temperature ($T_c$)**

Measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) id determined from the cooling step, while melting temperature ($T_m$) is determined from the second heating step.

**Tiger stripes (MSE)**

The tendency to show flow marks was examined with a method as described below. The basis of this method is described in detail in WO 2010/149529 A1, which is incorporated herein in its entirety. Also described in Sybille Frank et al. in PPS 25 Intern. Conf. Polym. Proc. Soc 2009 or Proceedings of the SPIE, Volume 6831, pp 68130T-68130T-8 20 (2008). But in the present invention the device and the postprocessing were further improved and herein explained.

An optical measurement system, was used for characterizing the surface quality. This method consists of two aspects:

1. Image recording:

The basic principle of the measurement system is to illuminate the plates with a defined light source (LED) in a closed environment and to record an image with a CCD-camera system. The system is described in this document.
2. Image analysis:
The specimen is placed beneath the camera and an image of the surface is recorded. The created grey value image is analysed in lines. From the recorded deviations of grey values the mean square error (MSE) is calculated allowing a quantification of surface quality, i.e. the larger the MSE value the more pronounced is the surface defect.

Generally, for one and the same material, the tendency to flow marks increases when the injection speed is increased. The system is described in this document.

For this evaluation plaques 440×148×2.8 mm with grain VW K50 and a filmgate of 1.4 mm were used and were produced with different filling times of 1.5, 3 and 6 sec respectively.

Further conditions:

Melt temperature: 240°C
Mould temperature 30°C
Dynamic pressure: 10 bar hydraulic

**Isotropic area shrinkage**

The area shrinkage was calculated from shrinkage data determined on circular sector plates of 320 mm radius, 20 ° opening angle and 2.8 mm thickness produced by injection moulding with an Engel ES 1350/350 machine and filled through a rectangular gate of $7.6 \times 2.8 \, mm^2$ at the base of the sector. Test specimens of the accordant dimensions can also be cut from samples of injection moulded articles, such as injection moulded automotive articles. A melt temperature of 240 °C, a mould temperature of 25 °C and a filling time of 3.5 s were used, followed by a holding time of 20 s at a holding pressure of 400 bar.

Instead of measuring the external dimension of the plates, a pattern of circular dots was generated on the plates by eroded spots of 1 mm diameter at distances between 5 and 10 mm. The original pattern is recorded immediately after de-moulding by an OGP Smartscope Flash 400 optical gauging system and used as dimensional reference. After 96 h at 23 °C, the post-shrinkage moulding pattern is determined and all deviations of point-to-point distances are recorded. For calculating the isotropic area shrinkage, a number of measuring points is connected by vectors and the resulting area determined, with A being the area after 96 h and $A_0$ the area before that period. The isotropic area shrinkage, $S_{iso}$, is then calculated as

$$ S_{iso} = 1 - \sqrt{\frac{\sum A}{\sum A_0}} $$

**2. Experiments**

Catalyst system:

Heterophasic propylene copolymer (B)

For the polymerization process of HECO 1, a Ziegler-Natta type catalyst as used and described for the inventive examples of WO 2016/066446 A1 and pre-polymerized with vinylcyclohexane to achieve nucleation with poly(vinylcyclohexane) was used. Nucleation by prepolymerization with vinylcyclohexane is described in EP 2 960 256 B1 and EP 2 960 279 B1 in detail. These documents are incorporated by reference.

Heterophasic propylene copolymer (E) and comparative HECO

For the polymerization process of HECO 2 and HECO 3 (E) a traditional transesterified high yield $MgCl_2$-supported Ziegler-Natta polypropylene catalyst component comprising diethyl phthalate as internal donor was used. The catalyst component and its preparation concept are described in general for example in patent publications EP491566, EP591224 and EP586390.

Accordingly, the catalyst component was prepared as follows: first, 0.1 mol of $MgCl_2$ x 3 EtOH was suspended under inert conditions in 250 ml of decane in a reactor at atmospheric pressure. The solution was cooled to -15°C and the 300 ml of cold $TiCl_4$ was added while maintaining the temperature at said temperature. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl$_4$ was added and the temperature was kept at 135 °C for 120 minutes. After this, the catalyst was filtered from the liquid and washed six times with 300 ml heptane at 80 °C. Then, the solid catalyst component was filtered and dried.

The catalyst for HECO 3 was further modified (VCH modification of the catalyst). 35 ml of mineral oil (Paraffinum Liquidum PL68) was added to a 125 ml stainless steel reactor followed by 0.82 g of triethyl aluminum (TEAL) and 0.33 g of dicyclopentyl dimethoxy silane (donor D) under inert conditions at room temperature. After 10 minutes 5.0 g of the catalyst prepared above (Ti content 1.4 wt.-%) was added and after additional 20 minutes 5.0 g of vinylcyclohexane (VCH) was added. The temperature was increased to +60 °C during 30 minutes and was kept there for 20 hours. Finally, the temperature was decreased to +20 °C and the concentration of unreacted VCH in the oil/catalyst mixture was analysed and was found to be 200 ppm weight.

HECO1, HECO 2 and HECO 3 were made in prepolymerization / loop reactor / gas phase reactor 1 / gas phase reactor 2 / gas phase reactor 3 configuration followed by a pelletization step. The catalyst system defined above was used in combination with triethyl-aluminium (TEAL) as co-catalyst and dicyclopentadienyl-dimethoxy silane (donor D) as external donor.

*Table 1: Preparation of HECO 1, HECO 2 and HECO 3*

|  |  | HECO 1 (B) | HECO 2 | HECO 3 (E) |
|---|---|---|---|---|
| Catalyst |  | as described above | as described above | |
| Donor |  | D | D | D |
| **Prepoly** |  |  |  |  |
| Co/ED | mol/mol | 10.0 | 10.0 | 10.0 |
| Co/Ti | mol/mol | 204 | 220 | 200 |
| Temperature | °C | 20 | 30 | 30 |
| Residence time | min | 0.27 | 0.08 | 0.26 |
| **Loop** |  |  |  |  |
| Temperature | °C | 75 | 75 | 76 |
| Pressure | kPa | 5500 | 5400 | 5400 |
| Split | wt.-% | 44 | 52 | 47.5 |
| H2/C3 | mol/kmol | 36.39 | 22 | 24.70 |
| MFR | g/10min | 483 | 160 | 160 |
| **GPR1** |  |  |  |  |
| Temperature | °C | 80 | 80 | 80 |
| Pressure | kPa | 2100 | 2600 | 2400 |
| Split | wt.-% | 34 | 34 | 31.70 |
| H2/C3 | mol/kmol | 249 | 175 | 44.80 |
| MFR | g/10min | 442 | 160 | 55 |
| **GPR2** |  |  |  |  |
| Temperature | °C | 80 | 80 | 67 |
| Pressure | kPa | 1900 | 2500 | 2100 |
| C2/C3 | mol/kmol | 201 | 600 | 250 |
| H2/C2 | mol/kmol | 115 | 250 | 22.80 |
| Split | wt.-% | 15 | 14 | 11.70 |
| C2 | wt.-% | 4.5 | 8.8 | 6.9 |
| MFR | g/10min | 120 | 100 | 20 |

(continued)

| | | | | |
|---|---|---|---|---|
| **GPR2** | | | | |
| XCS | wt.-% | 13 | 15.0 | 18.0 |
| **GPR3** | | | | |
| Temperature | °C | 80 | - | 67 |
| Pressure | kPa | 1700 | - | 1500 |
| C2/C3 | mol/kmol | 530 | - | 300.0 |
| H2/C2 | mol/kmol | 94 | - | 22.0 |
| Split | wt.-% | 7 | 0 | 9.10 |
| **Pellet** | | | | |
| MFR | g/10min | 100 | 100 | 6 |
| Tm | °C | 165 | 165 | 166 |
| Tc | °C | 128 | 118 | 115 |

The heterophasic copolymers HECO 1 contains 0.8 wt% of talc HM2 (IMI FABI S.p.A.) with medium particle size D50 (sedigraph) of 2.4 $\pm$0.3 $\mu$m, 0.3 wt% of glycerin monostearate, 0.07 wt% of pentaerythrityl-tetrakis(3-(3',5'-di-tert. butyl-4-hydroxyphenyl)-propionate, 0.07 wt% of tris (2,4-di-*t*-butylphenyl) phosphite and 0.05 wt% calcium stearate. The HECO 2 contains 0.2 wt% of Plustalc H10 (from Elementis) with medium particle size D50 (sedigraph) of 2.3 $\pm$0.3 $\mu$m and 0.25 wt% of an additive cocktail of 40:40:20=pentaerythrityl-tetrakis(3-(3',5'-di-tert. butyl-4-hydroxyphenyl)-propionate:tris (2,4-di-*t*-butylphenyl) phosphite:calcium stearate. The HECO 3 contains 0.1 wt% of pentaerythrityl-tetrakis(3-(3',5'-di-tert. butyl-4-hydroxyphenyl)-propionate, 0.1 wt% of tris (2,4-di-*t*-butylphenyl) phosphite and 0.05 wt% of Calcium stearate. HECO1, HECO 2 and HECO 3 were compounded in a co-rotating twin-screw extruder Coperion ZSK 47 at 220°C

The Crystallization extraction analysis (CRYSTEX) of these three copolymers gave the results listed in Table 2.

Table 2: Crystallization extraction analysis (CRYSTEX) of HECO 1, HECO 2 and HECO 3 and further properties

| | | **HECO 1** | **HECO 2** | **HECO 3** |
|---|---|---|---|---|
| CF | wt.-% | 78.0 | 85.0 | 79.0 |
| C2(CF) | wt.-% | 1.5 | 3.5 | 2.0 |
| iV(CF) | dl/g | 1.02 | 1.2 | 1.90 |
| SF | wt.-% | 22.0 | 15.0 | 21.0 |
| C2(SF) | wt.-% | 36 | 40 | 23 |
| iV(SF) | dl/g | 3.0 | 2.0 | 5.5 |
| Flexural Modulus | MPa | 1350 | 1500 | 1091 |
| NIS at +23°C | kJ m$^{-2}$ | 6 | 4 | 51 |

Table 3 shows the properties of the mixed plastic polypropylene blends (A) originating from post-consumer waste, so called post-consumer resins (PCR) as used for the evaluation.

PCR2 and PCR3 were obtained from vis-breaking PCR1 using 1.35 wt% for the case of PCR2 and 3.15 wt% for the case of PCR2 of peroxide Pergaprop HX-5 PP from Pergan (CAS: 78-63-7) on twin screw extruder ZSE27. The process of vis-breaking was carried out in a twin screw extruder ZSE27 having the following temperature zones 30/180/200/210/220/220/230/230/220/220/210/210/200/200/190/180 °C. Throughput of 70 kg/h and screw rpm of 600 were applied for the production. Subsequently after the step of controlled-rheology-modification, PCR2 and PCR3 were aerated at 120°C for 10 hours in a pellet steam distillation unit using air throughput of 25-30 kg/h.

Table 3: Properties of the mixed plastic polypropylene blends PCR1 to PCR3.

| | | PCR1 | PCR2 | PCR3 |
|---|---|---|---|---|
| Recycling origin | | Yes, households | Yes, households | Yes, households |

(continued)

|  |  | PCR1 | PCR2 | PCR3 |
|---|---|---|---|---|
| Limonene | ppm | 12 | 13 | 12 |
| Talc | wt.-% | 1.5 | 1.5 | 1.5 |
| $MFR_2$ | g/10min | 25 | 80 | 150 |
| **CRYSTEX** |  |  |  |  |
| SF | wt% | 11 | 11 | 11 |
| C2 | wt% | 6.5 | 7 | 7 |
| C2(SF) | wt% | 27.7 | 27.5 | 27.8 |
| C2(CF) | wt% | 4.5 | 4.5 | 5 |
| IV, | dl/g | 1.56 | 1.23 | 1.07 |
| IV(SF) | dl/g | 1.71 | 0.93 | 0.85 |
| IV(CF) | dl/g | 1.55 | 1.2 | 1.07 |
| IV(SF)/IV(CF) |  | 1.10 | 0.78 | 0.79 |
|  |  |  |  |  |
| Density | kg m$^{-3}$ | 0.917 |  |  |
| Flexural Modulus | MPa | 1344 | 1357 | 1346 |
| NIS at +23°C | kJ m$^{-2}$ | 5.14 | 5 | 5 |

As the ethylene based plastomer (C), Engage HM 7487 was used, being an ethylene-1-butene plastomer with a density of 860 kg/m$^3$ and a $MFR_2$ (2.16 kg, 190°C, ISO1133) of 0.27 g/10min, commercially available from DOW Inc, USA.

As the inorganic filler (D), talc 1 or talc 2 was used.

Talc 1 was Jetfine 3CA with a $d_{50}$ of 1.2 $\mu$m and a $d_{95}$ of 3.3 $\mu$m (Sedigraph measurement), commercially available from IMERYS, France.

Talc 2 was Luzenac HAR T84 with a $d_{50}$ of 2.0 $\mu$m and a $d_{95}$ of 10.0 $\mu$m (Sedigraph measurement), commercially available from IMERYS.

As the propylene homopolymer (F), the commercial propylene homopolymer HL712FB with an $MFR_2$ (2.16 kg, 230°C, ISO1133) of 1200 g/10min, a Tm (DSC, ISO 11357-3) of 158°C and an intrinsic viscosity iV, determined according to crystallization extraction analysis (CRYSTEX), of 0.7 dl/g was used.

The final compositions were compounded in a Coperin ZSK40 twin-screw extruder at 220°C using the polymers and talc together with antioxidants, UV-stabilizers, slip agents, nucleating agents, carbon black masterbatch, calcium stearate, antifogging agent and carriers. The compositions of the examples are shown in Table 4.

*Table 4: Compositions of the examples*

|  | CE1 | CE2 | IE1 | IE2 | IE3 | IE4 | IE5 | IE6 |
|---|---|---|---|---|---|---|---|---|
| HECO1, wt% |  | 28.3 | 32 | 21.7 | 23 | 29.6 | 39.6 | 23.6 |
| HECO2, wt% | 24.11 |  |  |  |  |  |  |  |
| HECO3, wt% | 15 |  |  |  |  | 10 |  | 10 |
| PCR1, wt% | 25 | 20 |  |  |  |  |  |  |
| PCR2, wt% |  |  | 20 | 30 | 30 |  |  |  |
| PCR3, wt% |  |  |  |  |  | 25 | 25 | 30 |
| Plastomer, wt% | 17 | 21 | 21 | 21 | 21 | 15 | 15 | 15 |
| Talc 1, wt% | 15.5 | 16 | 16 | 16 |  | 16 | 16 | 17 |
| Talc 2, wt% |  |  |  |  | 15 |  |  |  |
| PP-Homo (F), wt% |  | 8 | 8 | 8 | 8 |  |  |  |

(continued)

|  | CE1 | CE2 | IE1 | IE2 | IE3 | IE4 | IE5 | IE6 |
|---|---|---|---|---|---|---|---|---|
| Additives: |  |  |  |  |  |  |  |  |
| Antioxidant (Songnox 1076), wt% | 0.07 | 0.2 | 0.2 | 0.2 | 0.2 | 0.2 | 0.2 | 0.2 |
| Antioxidant (Richfos 168), wt% | 0.2 | 0.07 | 0.07 | 0.07 | 0.07 | 0.07 | 0.07 | 0.07 |
| Slip agent (Oleamide), wt% | 0.2 |  |  |  |  |  |  |  |
| Slip agent (Finawax-E), wt% |  | 0.2 | 0.2 | 0.2 | 0.2 | 0.2 | 0.2 | 0.2 |
| UV stabilizer (Chimassorb 119), wt% | 0.2 |  |  |  |  |  |  |  |
| UV stabilizer (Sabostab UV228 50 PP), wt% | 0.4 | 0.2 | 0.2 | 0.2 | 0.2 | 0.2 | 0.2 | 0.2 |
| Carbon black master batch (CBMB- 95-Black 7-PE-40), wt% | 2 | 2 | 2 | 2 | 2 | 2 | 2 | 2 |
| Acid scavenger (Castearate), wt% | 0.2 | 0.2 | 0.2 | 0.2 | 0.2 | 0.2 | 0.2 | 0.2 |
| Demolding agent (GMS 90), wt% | 0.12 | 0.12 | 0.12 | 0.12 | 0.12 | 0.12 | 0.12 | 0.12 |
| Carrier H-PP (HC001A-B1), wt% | 0 | 3.71 | 0.01 | 0.31 | 0.01 | 1.41 | 1.41 | 1.41 |

Table 5 shows the properties of the comparative compositions CE1-CE2 and the inventive compositions IE1-IE6.

*Table 5: Properties of the exemplary compositions.*

|  | CE1 | CE2 | IE1 | IE2 | IE3 | IE4 | IE5 | IE6 |
|---|---|---|---|---|---|---|---|---|
| $MFR_2$, g/10 min | 10 | 24 | 33 | 27 | 29 | 40 | 30 | 26 |
| CRYSTEX |  |  |  |  |  |  |  |  |
| SF, wt% | 34 | 32 | 34 | 35 | 35 | 32 | 32 | 32 |
| C2, wt% | 21 | 28 | 24 | 23 | 23 |  | 20 | 20 |
| C2(SF), wt% | 54 | 78 | 62 | 62 | 62 |  | 51 | 51 |
| C2(CF), wt% | 5.5 | 4.8 | 4.8 | 4.8 | 4.5 |  | 4.7 | 4.7 |
| iV, dl/g | 1.9 | 1.6 | 1.5 | 1.5 | 1.5 |  | 1.5 | 1.6 |
| iV(SF), dl/g | 2.3 | 2.5 | 2.25 | 2.15 | 2.15 | 2.62 | 2.26 | 2.38 |
| iV(CF), dl/g | 1.7 | 1.22 | 1.1 | 1.1 | 1.1 | 1.2 | 1.08 | 1.07 |
| iV(SF)/iV(CF) | 1.35 | 2.05 | 2.05 | 1.95 | 1.95 | 2.18 | 2.10 | 2.22 |
| Flexural modulus, MPa | 1571 | 1541 | 1542 | 1527 | 1646 | 1676 | 1699 | 1726 |
| Charpy NIS at +23°C, $kJ/m^2$ | 51 | 21 | 11 | 10 | 13 | 36 | 25 | 38 |
| Charpy NIS at - 20°C, $kJ/m^2$ | 5.9 | 6 | 5 | 5 | 5 | 6.6 | 6 | 6 |
| Energy at max force at +23°C, J |  | 19 | 19 | 19 | 19 | 20 | 20 | 20 |
| Puncture energy at +23°C, J |  | 34 | 33 | 33 | 35 | 37 | 35 | 35 |
| Rupture profile at +23°C |  | YD | YD9 YS1 | YD7 YS3 | YD 10 | YD | YD | YD |
| Energy at max force at -30°C, J |  | 30 | 28 | 27 | 27 | 30 | 29 | 35 |
| Puncture energy at -30°C, J |  | 34 | 30 | 29 | 29 | 39 | 35 | 41 |
| Rupture profile, -30°C, J |  | YU/ NY | YU/ NY | YU/ NY | NY | YU | YU | YU |
| Shrinkage isotropic are, % | 0.9 | 0.8 | 0.8 | 0.8 | 0.8 | 0.9 | 0.9 | 0.9 |
| MSE, injection time 1.5 s | 29 | 12 | 8 | 8 | 8 | 5 | 4 | 4 |
| MSE, injection time 3 s | 17 | 5 | 4 | 4 | 4 |  |  |  |

As can be seen by the inventive examples IE1-IE6, using a vis-broken mixed plastic polypropylene blend (PCR2 or PCR3) with a high $MFR_2$ leads to an improvement of the surface appearance (lower MSE) of an article made from the respective compositions. Even with amounts of 30 wt.-% of the mixed plastic polypropylene blend (IE2, IE3 and IE6), this improvement can be seen.

**Claims**

1.  A composition suitable for automotive applications

    obtainable by blending at least components (A), (B), (C) and (D)

    (A) 15 wt.-% to 45 wt.-%, preferably 18 to 44 wt.-%, more preferably 20 to 40 wt.-% of a mixed-plastics polypropylene blend;
    (B) 15 wt.-% to 45 wt.-%, preferably 20 to 44 wt.-%, more preferably 35 to 43 wt.-% of a heterophasic propylene copolymer;
    (C) 10 wt.-% to 25 wt.-%, preferably 11 to 24 wt.-%, more preferably 12 to 23 wt.-% of an ethylene-based plastomer; and
    (D) 10 wt.-% to 25 wt.-%, preferably 11 to 22 wt.-%, more preferably 12 to 20 wt.-% of an inorganic filler;

    wherein all percentages refer to the total composition,
    wherein the combined amount of the components (A), (B), (C) and (D) is more than 85 wt.-% based on the total weight of the composition,
    wherein the mixed-plastics polypropylene blend (A) has

    - a melt flow rate $MFR_2$ (230°C, 2.16 kg, ISO 1133) of 70 to 200 g/10min, preferably 75 to 170 g/10min,
    - a soluble fraction (SF) content determined according to crystallisation extraction analysis (CRYSTEX) in the range of from 4.0 to 15.0 wt.-%, preferably in the range of from 4.5 to 13.5 wt.-%; and
    - said soluble fraction (SF) has an intrinsic viscosity (iV(SF)), determined according to crystallisation extraction analysis (CRYSTEX) , in the range of from 0.5 to 1.4 dl/g, preferably in the range of from 0.6 to 1.1 dl/g;

    the heterophasic propylene copolymer (B) comprises a matrix phase and an elastomer phase dispersed therein and has

    - a melt flow rate $MFR_2$ (230°C, 2.16 kg, ISO 1133) of 85 to 250 g/10min, preferably 90 to 150 g/10min, more preferably 95 to 125 g/lOmin;
    - a soluble fraction (SF) content determined according to crystallisation extraction analysis (CRYSTEX) in the range of from 18.0 wt.-% to 30.0 wt.-%; and
    - an intrinsic viscosity of said soluble fraction iV(SF), determined according to crystallisation extraction analysis (CRYSTEX), of 2.0 dl/g to 4.5 dl/g, preferably of 2.4 to 3.8 dl/g, more preferably of 2.5 to 3.7 dl/g;

    the ethylene based plastomer (C) being a copolymer of ethylene with comonomer units selected from alpha-olefins having from 4 to 10 carbon atoms, preferably from alpha-olefins having from 4 to 8 carbon atoms, most preferably from 1-butene, has

    - a melt flow rate $MFR_2$ (190°C, 2.16 kg, ISO 1133) in the range of 0.1 to 2.0 g/10min, preferably of 0.2 to 1.0 g/10min; and
    - a density, determined according to ISO 1183-187, of 850 to 870 kg/m$^3$, preferably from 855 to 865 kg/m$^3$; and

    the composition has a melt flow rate $MFR_2$ (230°C, 2.16 kg, ISO 1133) of 20 to 60 g/10min, preferably 22 to 48 g/10min, more preferably 25 to 45 g/10min.

2.  The composition according to claim 1, **characterized in that** the mixed-plastics polypropylene blend (A) has a polydispersity ($M_w/M_n$) determined by Gel Permeation Chromatography (GPC) in the range of 2.0 to 7.0, preferably 4.0 to 6.5.

3.  The composition according to any of the preceding claims, **characterized in that** the mixed-plastics polypropylene blend (A) is a vis-broken mixed-plastics polypropylene blend and contains peroxide(s) or decomposition products of peroxide(s).

4. The composition according to any of the preceding claims, **characterized in that**

- the crystalline fraction (CF) of the mixed-plastics polypropylene blend (A) has an intrinsic viscosity (iV(CF)), determined according to crystallisation extraction analysis (CRYSTEX) in the range of from 0.9 to 1.4 dl/g, preferably in the range of from 1.0 to 1.3 dl/g; and
- the ratio between the intrinsic viscosity of the soluble fraction (iV(SF)) and the intrinsic viscosity of the crystalline fraction (iV(CF)) of the mixed-plastics polypropylene blend (A) is in the range of 0.5 to 1.0, preferably in the range of 0.70 to 0.85.

5. The composition according to any of the preceding claims, **characterized in that** the composition has

- a crystalline fraction (CF) content determined according to crystallisation extraction analysis (CRYSTEX) in the range of from 55.0 to 80.0 wt.-%, preferably in the range of from 58.0 to 75.0 wt.-%,
- an intrinsic viscosity of said crystalline fraction (iV(CF)), determined according to crystallisation extraction analysis (CRYSTEX), of less than 1.25 dl/g, preferably in the range of 0.90 to 1.20 dl/g,
- and the ratio between the intrinsic viscosity of the soluble fraction (iV(SF)) and the intrinsic viscosity of the crystalline fraction (iV(CF)) of the composition is more than 1.80, preferably in the range of 1.90 to 2.50, more preferably of 2.09 to 2.40.

6. The composition according to any of the preceding claims, **characterized in that**

- the soluble fraction (SF) of the composition has an ethylene content (C2(SF)), as determined by FT-IR spectroscopy calibrated by quantitative $^{13}$C-NMR spectroscopy, in the range of from 45.0 to 75.0 wt.-%, preferably in the range of from 50.0 to 70.0 wt.-%, and
- the crystalline fraction (CF) of the composition has an ethylene content (C2(CF)), as determined by FT-IR spectroscopy calibrated by quantitative $^{13}$C-NMR spectroscopy, in the range of from 1.0 to 10.0 wt.-%, preferably in the range of from 2.0 to 7.0 wt.-%,

7. The composition according to any one of the preceding claims, wherein the inorganic filler (D) is talc having

- a median particle size $d_{50}$ before compounding of 0.3 to 30.0 micrometers, preferably 0.5 to 15.0 micrometers; and/or
- a top-cut particle size $d_{95}$ before compounding of 1.0 to 50.0 micrometers, preferably 1.5 to 35.0 micrometers.

8. The composition according to any one of the preceding claims, obtainable by blending components (A), (B), (C), (D) and one of the following components

(E) 5 to 15 wt.-%, preferably 8 to 12 wt.-% of a second heterophasic propylene copolymer; or
(F) 5 to 12 wt.-%, preferably 6 to 10 wt.-%, of a propylene homopolymer;
wherein all percentages refer to the total composition, and wherein
the second heterophasic propylene copolymer (E) comprises a matrix phase and an elastomer phase dispersed therein and has

- a melt flow rate MFR$_2$ (230°C, 2.16 kg, ISO 1133) of 2 to 10 g/10min, preferably 3 to 8 g/10min, more preferably 3.5 to 7.5 g/10min;
- a soluble fraction (SF) content determined according to crystallisation extraction analysis (CRYSTEX) of more than 15.0 to 30.0 wt.-%, preferably of 18.0 to 25.0 wt.-%; and
- an intrinsic viscosity of said soluble fraction iV(SF) according to crystallisation extraction analysis (CRYSTEX) in the range of 4.0 dl/g to 10.0 dl/g, preferably of 4.5 to 8.0dl/g, more preferably of 5.1 to 5.8 dl/g; and

wherein the propylene homopolymer (F) has

- a melt flow rate MFR$_2$ (230°C, 2.16 kg, ISO 1133) of 800 to 2000 g/IOmin, preferably 900 to 1600 g/10 min, more preferably 1000 to 1500 g/10 min.

9. The composition according to any one of the preceding claims, **characterized in that** the mixed-plastic polypropylene blend (A) is a recycled material originating from post-consumer waste and has a limonene content, determined by solid phase microextraction (HS-SPME-GC-MS), in the range of from 1.0 to 25.0 ppm, preferably 5.0 to 20.0 ppm.

10. A heterophasic polypropylene composition suitable for automotive applications comprising a mixed-plastic polypropylene blend, **characterized in that** the composition has

- a melt flow rate $MFR_2$ (230°C, 2.16 kg, ISO 1133) of 20 to 60 g/lOmin, preferably 22 to 48 g/lOmin, more preferably 25 to 45 g/lOmin,
- a soluble fraction (SF) content determined according to crystallisation extraction analysis (CRYSTEX) in the range of 25.0 to 42.0 wt.-%, preferably of 30.0 to 38.0 wt.-%,
- a crystalline fraction (CF) content determined according to crystallisation extraction analysis (CRYSTEX) in the range of from 58.0 to 75.0 wt.-%, preferably in the range of from 62.0 to 70.0 wt.-%,
- an ethylene content of said soluble fraction (C2(SF)), as determined by FT-IR spectroscopy calibrated by quantitative $^{13}$C-NMR spectroscopy, in the range of from 45.0 to 75.0 wt.-%, preferably in the range of from 50.0 to 68.0 wt.-%,
- an intrinsic viscosity of said crystalline fraction (iV(CF)), determined according to crystallisation extraction analysis (CRYSTEX), of less than 1.25 dl/g, preferably in the range of 0.90 to 1.20 dl/g,
- a ratio between the intrinsic viscosity of the soluble fraction (iV(SF)) and the intrinsic viscosity of the crystalline fraction (iV(CF)) of more than 1.90, preferably in the range of 1.91 to 2.50, more preferably of 2.09 to 2.40, and
- a limonene content, determined by solid phase microextraction (HS-SPME-GC-MS), in the range of from 0.10 to 25.0 ppm.

11. The heterophasic polypropylene composition according to claim 10, **characterized in that**

- the crystalline fraction (CF) of the composition has an ethylene content (C2(CF)), as determined by FT-IR spectroscopy calibrated by quantitative $^{13}$C-NMR spectroscopy, in the range of from 2.0 to 7.0 wt.-%, and
- the soluble fraction (SF) of the composition has an intrinsic viscosity (iV(SF)), determined according to crystallisation extraction analysis (CRYSTEX), of more than 2.0 dl/g, preferably in the range of from 2.1 to 2.8 dl/g.

12. An article, preferably a moulded article, more preferably a moulded automotive article comprising the composition according to any of claims 1 to 9 or the composition according to claims 10 or 11.

13. Use of the composition according to any of claims 1 to 9 or the composition according to claims 10 or 11 for injection moulding of articles, preferably automotive articles, more preferably automotive exterior articles.

14. An apparatus for tiger line detection on an article, in particular a moulded article comprising:

- a black box, wherein the black box comprises a black-painted cabinet;
- an article holder, disposed within the cabinet, configured to hold the article;
- a light-emitting diode, LED, light source, disposed within the cabinet, being configured to illuminate the article with LED light; wherein the LED light source provides the LED light to the article at least -90°, wherein the LED light source has a beam angle of 15 to 25°; wherein the LED light source comprises a distributed LED plate with a camera hole, in particular a central camera hole;
- a camera, in particular a charge coupled device, CCD, camera;

wherein the LED light source and the camera are positioned in line with the article; wherein the LED light source is disposed between the camera and the article holder;
wherein the camera is configured to take a picture of the article through the camera hole;
wherein a distance between the camera and the article is at least 1200 mm;

- a processing unit, configured to process the picture of the article for tiger line detection, in particular by analyzing the whole taken picture, further in particular wherein analyzing the whole taken picture comprises dividing the picture into at least three equal sections.

15. The apparatus of claim 14, comprising:
at least two low angle LED plates, disposed at opposing sides within the cabinet between the LED light source and the article holder, in particular closer to the article holder than the LED light source, wherein the at least two low angle LED plates are configured to illuminate the article with low angle LED light, wherein in particular the low angle is 5° or lower.

*FIG. 1*

EUROPEAN SEARCH REPORT

Application Number

EP 24 18 0657

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | **EP 4 101 889 B1** (BOREALIS AG [AT]) 20 December 2023 (2023-12-20) * examples 3,4 * ----- | 1-9,12, 13 | INV. C08L23/14 |
| A | **EP 4 101 890 B1** (BOREALIS AG [AT]) 1 May 2024 (2024-05-01) * examples 1-4 * ----- | 1-9,12, 13 | |

**TECHNICAL FIELDS SEARCHED      (IPC)**

C08L

The present search report has been drawn up for all claims

| Place of search | Date of completion of the search | Examiner |
|---|---|---|
| Munich | 20 December 2024 | Ritter, Nicola |

EPO FORM 1503 03.82 (P04C01)

Europäisches
Patentamt

European
Patent Office

Office européen
des brevets

**Application Number**

EP 24 18 0657

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-9(completely); 12, 13(partially)

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**

**SHEET B**

The Search Division considers that the present European patent application does not comply with the requirements of unity of invention and relates to several inventions or groups of inventions, namely:

    1. claims: 1-9(completely); 12, 13(partially)

       A composition suitable for automotive applications
       obtainable by blending at least components (A), (B), (C) and
       (D)
                            ---

    2. claims: 10, 11(completely); 12, 13(partially)

       A heterophasic polypropylene composition suitable for
       automotive applications comprising a mixed-plastic
       polypropylene blend, characterized in that the composition
       has the following properties...
                            ---

    3. claims: 14, 15

       An apparatus for tiger line detection on an article
                            ---

## ANNEX TO THE EUROPEAN SEARCH REPORT
## ON EUROPEAN PATENT APPLICATION NO.

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2024

| Patent document cited in search report | | Publication date | Patent family member(s) | | Publication date |
|---|---|---|---|---|---|
| EP 4101889 | B1 | 20-12-2023 | BR 112023025637 | A2 | 27-02-2024 |
| | | | CN 117460774 | A | 26-01-2024 |
| | | | EP 4101889 | A1 | 14-12-2022 |
| | | | ES 2971534 | T3 | 05-06-2024 |
| | | | JP 7600439 | B2 | 16-12-2024 |
| | | | JP 2024520750 | A | 24-05-2024 |
| | | | KR 20240007718 | A | 16-01-2024 |
| | | | US 2024262999 | A1 | 08-08-2024 |
| | | | WO 2022258576 | A1 | 15-12-2022 |
| EP 4101890 | B1 | 01-05-2024 | BR 112023025572 | A2 | 20-02-2024 |
| | | | CN 117460775 | A | 26-01-2024 |
| | | | EP 4101890 | A1 | 14-12-2022 |
| | | | ES 2984869 | T3 | 31-10-2024 |
| | | | JP 7600440 | B2 | 16-12-2024 |
| | | | JP 2024520765 | A | 24-05-2024 |
| | | | KR 20240010083 | A | 23-01-2024 |
| | | | US 2024262997 | A1 | 08-08-2024 |
| | | | WO 2022258578 | A1 | 15-12-2022 |

EPO FORM P0459

For more details about this annex : see Official Journal of the European Patent Office, No. 12/82

## REFERENCES CITED IN THE DESCRIPTION

**Patent documents cited in the description**

- WO 2010149529 A1
- WO 2016066446 A1
- EP 2960256 B1
- EP 2960279 B1
- EP 491566 A
- EP 591224 A
- EP 586390 A

**Non-patent literature cited in the description**

- **LJILJANA JEREMIC** ; **ANDREAS ALBRECHT** ; **MARTINA SANDHOLZER** ; **MARKUS GAHLEIT-NER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- **SYBILLE FRANK et al.** *PPS 25 Intern. Conf. Polym. Proc. Soc*, 2009
- *Proceedings of the SPIE*, 2008, vol. 6831, 68130T-68130T